(19) Europäisches Patentamt
European Patent Office
Office européen des brevets

(11) **EP 1 970 727 B1**

(12) **EUROPEAN PATENT SPECIFICATION**

(45) Date of publication and mention
of the grant of the patent:
**04.08.2010 Bulletin 2010/31**

(51) Int Cl.:
**G01S 7/292** (2006.01)   **G01S 7/487** (2006.01)

(21) Application number: **07119926.9**

(22) Date of filing: **02.11.2007**

(54) **Object detector for a vehicle**

Objektdetektor für ein Fahrzeug

Détecteur d'objet pour véhicule

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.03.2007 JP 2007067356**

(43) Date of publication of application:
**17.09.2008 Bulletin 2008/38**

(73) Proprietor: **OMRON Corporation, a corporation of Japan**
**Shiokoji-dori, Shimogyo-ku**
**Kyoto-shi**
**Kyoto 600-8530 (JP)**

(72) Inventor: **Mitani, Shigetomo**
**c/o Omron Corporation**
**Kyoto-shi Kyoto 600-8530 (JP)**

(74) Representative: **Wilhelms · Kilian & Partner**
**Patentanwälte**
**Eduard-Schmid-Straße 2**
**81541 München (DE)**

(56) References cited:
**EP-A- 1 172 664**      **US-A1- 2003 218 919**
**US-A1- 2006 072 099**      **US-A1- 2006 262 290**
**US-B1- 6 229 597**

- HOFELE F X: "Scan-to-scan integration-correlation for the detection of small fast targets" RADAR, 2001 CIE INTERNATIONAL CONFERENCE ON, PROCEEDINGS OCT 15-18, 2001, PISCATAWAY, NJ, USA,IEEE, 15 October 2001 (2001-10-15), pages 380-384, XP010577844 ISBN: 0-7803-7000-7
- LEVANON N: "ANALYTIC COMPARISON OF FOUR ROBUST ALGORITHMS FOR POST-DETECTION INTEGRATION" IEE PROCEEDINGS F. COMMUNICATIONS, RADAR & SIGNAL PROCESSING, INSTITUTION OF ELECTRICAL ENGINEERS. STEVENAGE, GB, vol. 139, no. 1 PART F, 1 February 1992 (1992-02-01), pages 67-72, XP000257892 ISSN: 0956-375X

**Description**

Background of the Invention

This invention relates to an object detector for mounting to a mobile structure such as a vehicle for detecting an object such as an obstacle that may be present in front.

An adaptive cruise control (ACC) device mounted to an automobile is connected to an object detector adapted to detect an object such as a front going vehicle or a person that may be present in front by scanning a frontal area with a beam of electromagnetic waves such as light and measuring the length of time from the time of transmitting the electromagnetic waves and the time of receiving reflected waves.

Such an object detector is required to have an appropriate range of measurable distances and an improved detection ratio for an object with low reflectivity by improving its S/N ratio, as well as an improved detection ratio for moving objects. These requirements can be satisfied if the output power of the electromagnetic waves is increased, but the following problems are being pointed out regarding the increase in output power.

In the case of ordinary electromagnetic waves, there is the possibility of hypersensitivity to electromagnetic waves or ill effects to the brains if a human body is directly exposed to high-power waves with directionality. In the case of light such as laser light, an eye injury may be caused if irradiated by high-power laser light.

In view of these problems, the method of integrating (or cumulatively adding up) received signals to improve the S/N ratio without increasing the output of electromagnetic waves or the method of eliminating the background noise by the time series filtering of received signals to improve the S/N ratio is being carried out.

The technology of varying the time constant between short-distance and long-distance cases for integrating (or cumulatively adding up) the received signals (such as disclosed in Japanese Patent Publication Tokkai 09-318728) and the technology of improvising a filtering method to estimate the direction of motion of an object (such as disclosed in Japanese Patent 2743365) have also been proposed.

The former technology is capable of improving the detection ratio of distant objects while maintaining the response characteristics of short-distance objects by increasing the constant in the case of a long distance and reducing the constant in the case of a short distance. The latter technology makes it possible to improve the detection ratio of an object since the follow-up characteristics of objects become higher.

By merely adding up the received signals, however, it is difficult to sufficiently improve the S/N ratio because, when the object has moved, the received signals before the move remain in the integrated or added value. The method of using a time series filter also has problems because the received signals are not attenuated immediately but remains as an image because of the presence of the filter time constant although the object has actually left the area of measurement. In other words, the devices according to these documents could not prevent erroneous detection of objects while maintaining the S/N ration on a sufficiently high level.

US 2003/218919 A1 discloses an object detector for a vehicle according to the preamble of claim 1.

From EP-A-1 172 664 and HOFELE F X: "Scan-to-scan integration-correlation for the detection of small fast targets" RADAR, 2001 CIE INTERNATIONAL CONFERENCE ON, PROCEEDINGS OCT 15-18, 2001, PIS-CATAWAY, NJ, USA, IEEE 15 October 2001, pages 380-384, XP010577844 ISBN: 0-7803-7000-7, a scan-to-scan integration-correlation method for the detection of small fast targets is known.

LEVANON N: "ANALYTIC COMPARISON OF FOUR ROBUST ALGORITHMS FOR POST-DETECTION INTEGRATION" IEE PROCEEDINGS F. COMMUNICATIONS, RADAR & SIGNAL PROCESSING, INSTITUTION OF ELECTRICAL ENGINEERS. STEVENAGE, GB, vol. 139, no. 1 PART F, 1 February 1992, pages 67-72, XP000257892 ISSN: 0956-375X, discloses a scan-to-scan integration with a fixed integration length.

Summary of the Invention

It is therefore an object of this invention to provide an object detector which is for mounting to a mobile structure such as a vehicle and is capable of preventing erroneous detection of an object while maintaining the S/N ratio to a sufficiently high level by comparing received signals passed through a time series filter.

An object detector for a vehicle, according to this invention, comprises a light transmission control device that transmits a beam of electromagnetic waves forward so as to scan a target area, a light reception control device for receiving reflected waves from an object that is present in front, signal converting means for converting received waves into a reception signal according to the intensity of the reflected waves, and object detecting means for detecting the object based on a peak of the reception signal. In the above, the object detecting means includes signal adding means for generating area data by cumulatively adding up received signals for each of a specified number of areas into which the target area is partitioned, a memory that stores the area data for each of the areas, time series processing means for carrying out time series filtering of the area data read out of the memory, and an object detector that carries out a detection process if current area data obtained by a current scan with the time series filtering carried out by the time series processing means include the latest peak corresponding to one of the areas, if the past peak appeared by a previous scan corresponding to this one area and if the latest peak is not less than the past peak in value by more than a specified value, the object detector excluding the current area data from the detection process if the latest peak is less than the past peak in value by more than the specified value.

With an object detector thus characterized, the object detector excludes any data from the detection process if the value of the latest peak is less than that of the past peak by more than a certain specified value. In other words, the object detection process is carried out only when the value of the peak currently obtained is not less that that of the previously obtained peak by more than such a specified value, or only when the value of the currently obtained peak shows an increase or has decreased only a little from the time of the previous scan.

If an object leaves a target area of scan, reflected waves cease to be received and hence the value of the corresponding peak (the latest peak) becomes significantly smaller than its previous value (the past peak). Thus, if the peak value decreases by more than a certain value, it can be ascertained that this peak represents only an after image and hence it is excluded from the detection process. In this manner, it is possible to prevent an error from being committed by incorrectly concluding that an object is present in the scan area although no real object is present. Moreover, a high S/N ratio can be obtained with noise components removed sufficiently from the signal components since area data are obtained by cumulatively adding up received signals and a time series signal processor is used to carry out a filtering process on the area data.

According to a preferred embodiment of the invention, laser light with a lower power level is used so as to be harmless to human eyes, but since received signals are cumulatively added up, a high S/N ratio can be obtained by a filtering process on the area data.

According to another embodiment of the invention, the target area is partitioned into areas in the directions of the scan and the distance from the vehicle. For example, the scan area can be partitioned into fan-shaped flat areas (divisions). If the scan is carried out both in the horizontal and vertical directions, a three-dimensional division becomes also possible.

The object detector of this invention may further comprise inputting means for specifying areas for measurements. In the case of a moving target object of detection, for example, areas of interest can be freely selected according to the motion of the target object such that area data according to the invention can be generated only in areas considered to be necessary and hence the burden on the control part can be reduced.

Thus, this invention makes it possible to improve the S/N ratio and prevent incorrect detection of objects without requiring means with a complicated structure for cumulatively adding up received signals and the time series filtering.

Brief Description of the Drawings

Fig. 1 shows a vehicle to which an object detector embodying this invention is mounted.
Fig. 2 shows the S/N improving area in a range of scan.
Fig. 3 shows a situation where the object detector 4 is connected to an on-vehicle device 5 provided on the side of the vehicle.
Fig. 4 is a detailed block diagram of the object detector 4.
Fig. 5 shows the output sequence of the laser light.
Fig. 6 shows an example of data stored in the cumulative data memory 43.
Fig. 7A shows an example of changes in the input signals to the time series filter, and Fig. 7B shows an example of changes in the output data from the time series filter.
Fig. 8, consisting of Figs. 8A and 8B, is for explaining a method of object detection in a S/N improving area.
Fig. 9 is a schematic drawing of the structure around the time series signal processor 45.
Fig. 10 is a flowchart for specific operations of the control judging and other devices.
Fig. 11 is a flowchart for more detailed operations of the control judging and other devices.
Fig. 12 is a flowchart for specific operations of the time series signal processor.
Fig. 13 is a flowchart for specific operations of the object detector for an area other than S/N improving areas.
Fig. 14 is a flowchart for specific operations of the after image discriminator, or the object detector for a S/N improving area.

Detailed Description of the Invention

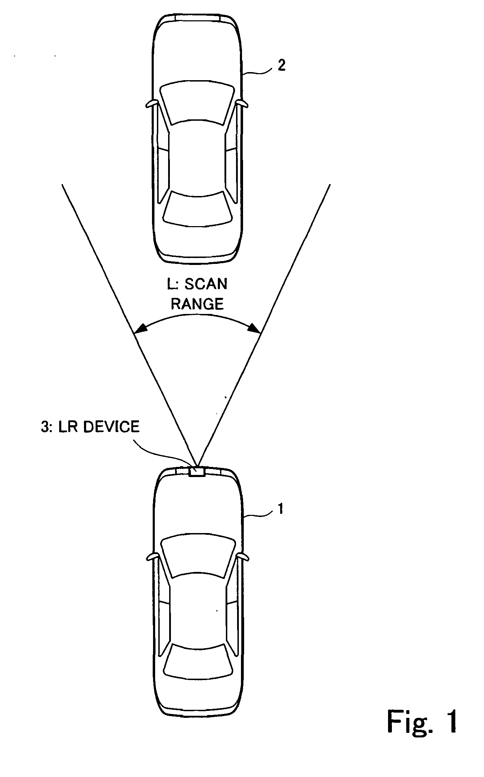

Fig. 1 shows a vehicle to which an object detector embodying this invention is mounted. Explained more in detail, it shows one's own vehicle 1 detecting a front going vehicle 2 by means of its object detector.

The object detector is provided with a laser radar device (hereinafter referred to as the LR device) 3 adapted to emit laser light which is a kind of electromagnetic wave beam. This LR device 3 is attached to the front part of the own vehicle 1 and serves to emit laser light forward and to scan a target area (or a scan area) L repeatedly and to receive at each scan reflected light from an object (such as the front going vehicle 2 in the example of Fig. 1) that may be present in front. Although the object detector will detect not only the front going vehicle 2 but also every objects that may be present in front, the front going vehicle 2 will be often mentioned as the example of object in front for convenience of description but it may sometimes be also referred to as the object or the target object of detection.

Relative to the own vehicle 1, the front going vehicle 2 may be stationary, moving forward (moving farther away), or backward (coming closer), moving to the right or moving to the left. As will be explained below, the object detector generates measurement data by integrating or cumulatively adding up received signals for each of the areas obtained by dividing the scan area L into specified numbers in the right-left direction and the direction of distance and detects the front going vehicle 2 for each of these areas. Thus, if the front going vehicle 2 leaves the divided areas, detection of the front going vehicle is no longer carried out in these areas.

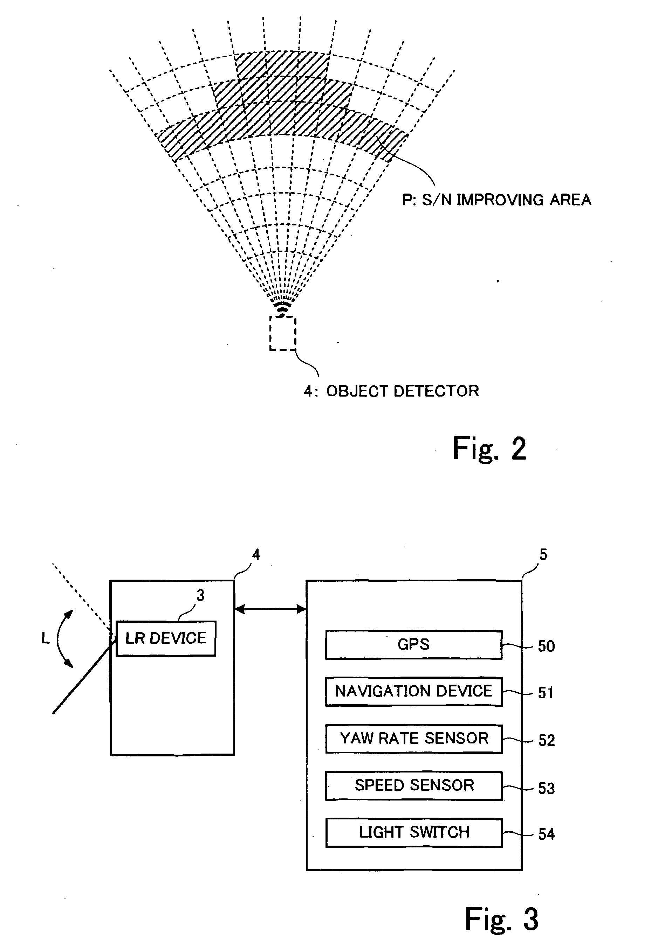

According to the illustrated example, a flat target area is divided into fan-shaped areas in the right-leff direction and in the direction of distance, as shown in Fig. 2. In Fig. 2, they are approximately rectangular divided areas (divisions). According to this example, some of these divisions are allowed to be specified as the S/N improving area P, meaning the area wherein the S/N ratio of the measurement data is to be improved. When the own vehicle 1 is traveling on a highway, for example, its traveling speed is high and it is preferable to improve the S/N ratio over an area elongated in the forward direction. In such a situation, the S/N improving area is selected over a range elongated in the forward direction with reference to the front going vehicle 2. On a narrow crowded road, on the other hand, the speed of the own vehicle 1 is slow, and there may be situations where it would be more preferable to improve the S/N ratio over an area wider in the right-left direction in view of the possibility of a vehicle cutting in from the side, rather than over an area elongated in the forward direction. In such a situation, the S/N improving area is selected over a range elongated in the right-left direction. In Fig. 2, shaded areas show the range that has been set as the S/N improving area. Although it is possible to select the entire range as the S/N improving area, it is not preferable because the burden on the control part becomes too heavy. Thus, it is recommended to select a maximum number of divisions by considering the capability of the control part.

As will be described below, the S/N ratio is improved over this S/N improving area by using a time series filter for time series filtering to remove noise. The kind of noise that is removed by the time series filter is mainly background noise that is superposed to signal components. Since a more or less fixed amount of noise of this kind is present, depending on the environment and the circuit constants but independent of the timing of the scan, it can be removed by passing through a time series filter having a time constant.

Fig. 3 shows a situation where the object detector 4 is connected to an on-vehicle device 5 provided on the side of the vehicle. The on-vehicle device 5 includes, for example, a GPS 50, a navigation device 51, a yaw rate sensor 52, a vehicle speed sensor 53 and light switches 54. Presence of the front going vehicle 2, the distance between the vehicles, the position of the own vehicle 1 and the road condition may be judged by outputting the information obtained on the basis of outputs from these sensors to the object detector 4 or by referencing the output from the object detector 4. For example, the position of the own vehicle 1 and the road condition ahead may be judged by the GPS 50 and the navigation device 51. It is possible to judge the position of the front going vehicle 2 on a map from the relative position between the own vehicle 1 and the front going vehicle 2 detected by the LR device 3 and to use it to judge whether or not the front going vehicle 2 is traveling on the road on which the own vehicle 1 is traveling. It is also possible to obtain the angular speed of the own vehicle 1 by means of the yaw rate sensor 52 and the speed of the own vehicle 1 by the vehicle speed sensor 53 and to obtain the radius of curvature of the road from the relationship (vehicle speed) = (radius of curvature)x(angular speed). Thus, even if the front going vehicle 2 is traveling on a curved road, a S/N improving area along a curved road can be set with reference to the front going vehicle 2.

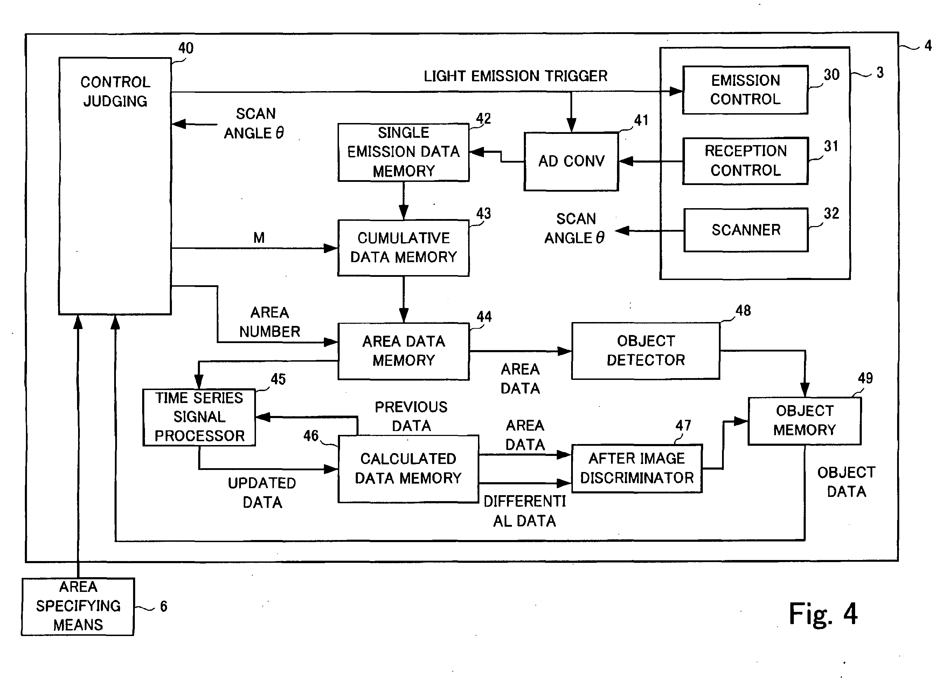

Fig. 4 is a detailed block diagram of the object detector 4. The LR device 3 is provided with a light transmission control device 30, a light reception control device 31 and a scanner 32. Of the object detector 4, the portions other than this LR device 3 form its object detecting part.

The light transmission control device 30 is provided with a laser diode (LD) for outputting laser light by receiving a light transmission trigger from a control judging device 40 and a transmission control means for controlling it and serves to make a scan within a specified angular range at a fixed angular speed by means of the scanner 32. Its angle is detected by a sensor (not shown) and outputted to the control judging device 40 as scan angle θ.

The light reception control device 31 is provided with a photodiode (PD) for receiving laser light reflected by the front going vehicle 2 and a reception control means for processing the reflection signal (reception signal) received by this PD.

The scanner 32 may be of any kind as long as it can operate laser light for carrying out a scan such as the kind for rotating a polygonal mirror or swinging in the right-left direction a lens disposed in front of the laser diode (LD). In the case of the latter, another lens for convergence may be disposed in front of the photodiode (PD) such that both lenses are operated together. Such a structure is preferable because reflected light can be received from the direction in which laser light was projected.

The laser light outputted by the light transmission control device 30 is set such that its output would be harmless to persons' eyes. Normally, its output is determined by a rule (class 1 laser) and if the output is kept within this standard, it is said that "the eye safety" condition is satisfied.

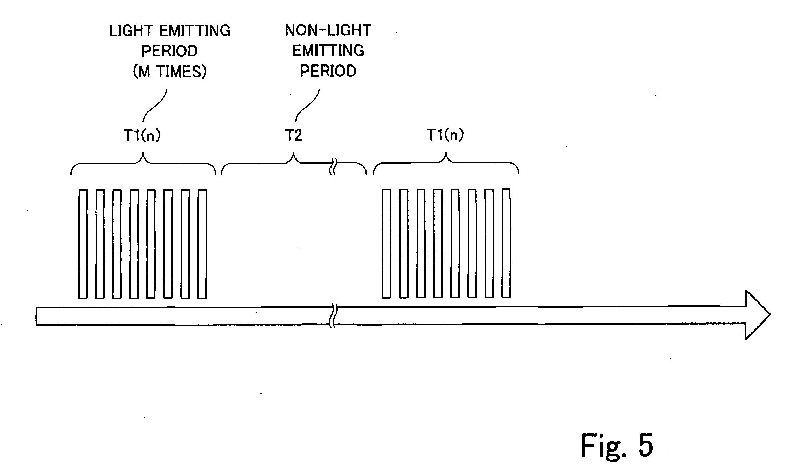

Fig. 5 shows the output sequence of the laser light. As shown, time period $T_1(n)$ indicates a light emitting period corresponding to an area at a certain direction $\theta_n$ (hereinafter referred to as area $\theta_n$). During this time period $T_1(n)$, laser light is repeatedly projected out for a specified number M of times to area $\theta_n$. After time period $T_1(n)$ has passed, another time period $T_2$ starts and laser light is emitted similarly onto another area. As far as area $\theta_n$ is concerned, however, this second period $T_2$ is a non-illuminating time period. For this reason, this will be referred to as non-light emitting period. When the cycle for laser light illuminating area $\theta_n$ comes back again, this is indicated by time period $T_1(n)$ and laser light is repeatedly projected out M times.

The eye safety condition is satisfied by limiting the total of emitted light energy within a specified range in the laser light output sequence. It is the light transmission control device 30 and the scanner 32 of the LR device 3 that set the output of the laser light and carry out the sequence control.

In Fig. 4, numeral 41 indicates an AD converter for carrying out high-speed sampling of received signals processed by the light reception control device 31 from the timing of the trigger for light transmission and carrying out AD conversion. The AD-converted data include information on the distance to the front going vehicle 2 and the quantity of received light.

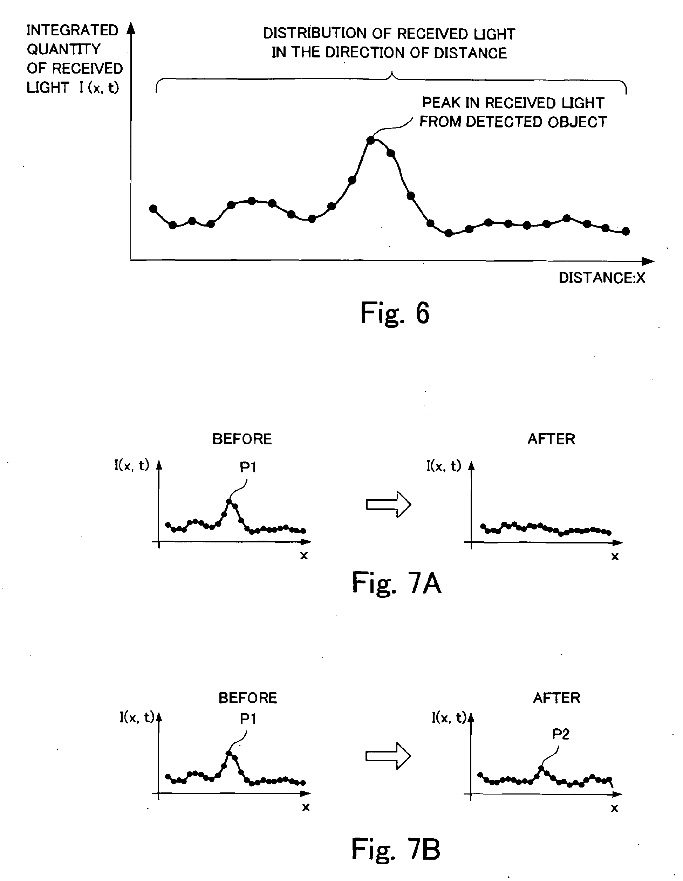

Numeral 42 indicates a single emission data memory for storing data measured by single emission of laser light in area $\theta_n$. Numeral 43 indicates a cumulative data memory serving to cumulatively (M times) store the data measured by single emission of laser light in area $\theta_n$ and stored by the single emission data memory 42 and to thereby generate "area data" of area $\theta_n$. Fig. 6 shows an example of data stored in the cumulative data memory 43. The distribution of received light quantity against distance can be obtained by converting into distance the length of time from the output of laser light until it is reflected by the front going vehicle and returns. The vertical axis of Fig. 6 represents the integrated quantity of light repetitively emitted and received continuously and the horizontal axis represents the corresponding distance. A peak in the quantity of received light is obtained at the distance where a detected object inclusive of the front going vehicle is present.

Numeral 44 indicates an area data memory for storing the area data of each of the areas $\theta_n$ cumulatively stored in the cumulative data memory 43. In order to store these data for each of the areas $\theta_n$, the area data memory 44 receives area numbers n from the control judging device 40.

Numeral 45 indicates a time series signal processor provided with a time series filter. If the area to be processed is a S/N improving area (See Fig. 2), it serves to correlate previous area data (from the previous scan) and those obtained by the current scan and to thereby reduce noise which is constantly present on the time axis so as to improve the S/N ratio. Numeral 46 indicates a calculated data memory for S/N improving area. The previously calculated values obtained by the time series signal processor 45 are stored in this calculated data memory 46 for S/N improving area and these calculated values are used at the time of the current scan for carrying out the filtering process.

Fig. 7A shows an example of changes in the input signals to the time series filter, and Fig. 7B shows an example of changes in the output data from the time series filter.

If the input data from the area data memory 44 change as shown in Fig. 7A as the position of an object changes, it may be concluded from the disappearance of the peak value P1 at a certain distance that the object has left the corresponding position. If these data are subjected to a filtering process by means of a time series filter, however, it can be seen as shown in Fig. 7B that there is a peak value P2 at the corresponding position in the output data of the time series filter. This means that the peak value P1 in the output data for the time series filter (which is approximately the same as the peak value P 1 in the input data of the time series filter) is stored in the calculated data memory 46, and the data inclusive of this peak value P 1 stored in the calculated data memory 46 and the input data (shown on the right-hand side of Fig. 7A) that at the time of the current scan are subjected to the filtering processing by the time series filter at the time of the current scan. As a result of this filtering process, the output data of the time series filter become the data inclusive of the peak value P2 (shown on the right-hand side of Fig. 7B).

Area data and differential data are outputted from this calculated data memory 46. The area data are results of a time series filtering process, while the differential data show the differences between the current area data and the previous area data. Since the differential data are indicative of an increase or a decrease in the quantity of received light, if the decrease in the quantity of received light corresponding to the peak value for the front going vehicle 2 is greater than a certain specified value, the data may be regarded as being indicative of a residual image (or an after image) in the area that is currently being processed, or the front going vehicle 2 may be considered to have left the area being currently processed. Numeral 47 indicates an object detector for the S/N improving area (hereinafter also referred to as the "after image discriminator"). This object detector (the after image discriminator) 47 does not carry out its object detection process if the decrease in the quantity of received light is in excess of the aforementioned specified value because it then concludes that the data correspond to a residual image. If there is no decrease in the quantity of received light, it carries out an object detection process. Area data for an area where S/N improving processing is not carried out are outputted to another object detector 48 by which an object detection process is carried out. Objects detected by the object detectors 47 and 48 are stored in an object memory 49 and these stored data are outputted to the control judging device 40.

As shown above, the S/N ratio can be improved in a S/N improving area by using the time series signal processor 45. As a result, the threshold value for the detection of an object can be set lower such that even a distant object or a low reflector can be quickly detected.

The control judging device 40 is connected to an improving area specifying means 6 for specifying a S/N improving area, serving as the inputting means for inputting a S/N improving area such as indicated as shaded area in Fig. 2. The inputting methods include the method of visually displaying the entire area as shown in Fig. 2 and using a cursor or the like within the display to directly indicate areas to be specified and the method of specifying a "high-speed mode" or a "low-speed mode" and automatically setting a S/N improving area according to the selected mode.

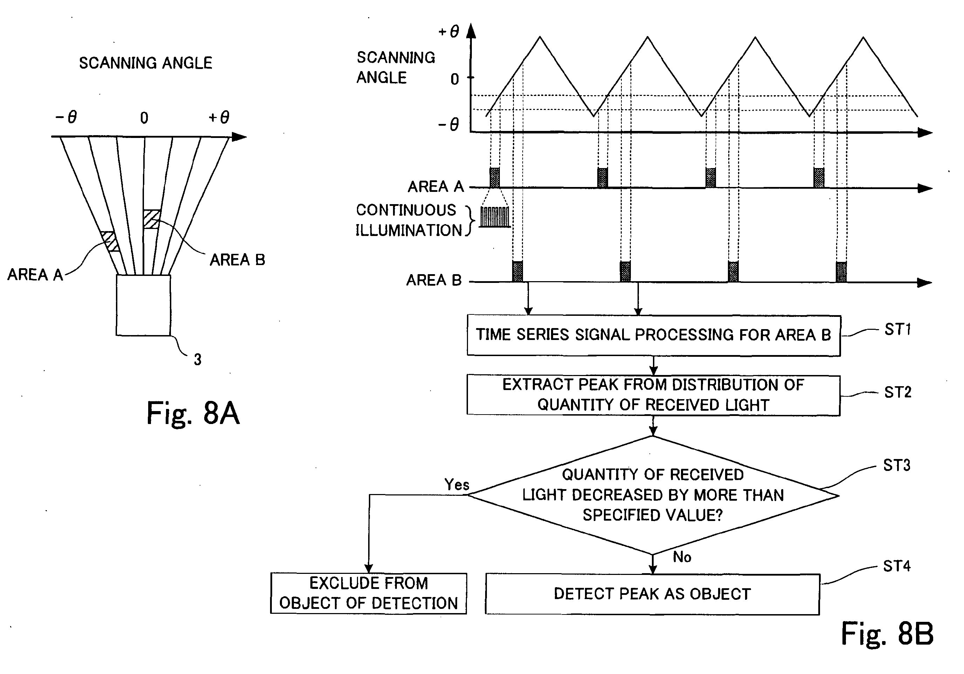

Fig. 8, consisting of Figs. 8A and 8B, is for explaining an object detection method in a S/N improving area B. Fig. 8A shows a scanning (oscillating) angle (+0 - -0) of the LR device 3, and Fig. 8B shows a detection method in the S/N improving area B. Area A in Fig. 8A indicates an area where S/N ratio is not to be improved.

As shown in Fig. 8A, the LR device 3 swings the laser light in the right-left direction, and the object detector 4 detects an object when the light is swung to the right. As shown in Fig. 8B, therefore, the laser light is continuously emitted to each area as the scanning angle changes from -0 to +θ.

Immediately before the signal processing is carried out for S/N improving area B, laser light is repetitively and continuously emitted for a specified number of times. Next, a time series signal process is carried out by the time series signal processor 45 (See Fig. 4) using a time series filter (Step ST1). The time series filter has a time constant and may be of any type such as an IIR (Infinite Impulse Response) filter. An input of a plurality of area data is necessary for this filtering process. In the example of Fig. 8, two area data items are inputted.

Next, a peak value is extracted from the area data (Step ST2). The number of peak values to be extracted need not be one. Next, the change (increase or decrease) of the peak values is determined (Step ST3) and a peak of which the value has not decreased from the previous measurement by more than a specified value is detected as the target object of detection (Step ST4). Peaks of which the values have decreased from the previous time of measurement by more than this specified value are not made the object of detections because they may be considered to be residual images (or after images) caused by the time series signal processing.

As for area A where the S/N ratio is not improved, the area data are not passed through the time series signal processor 45 but are transmitted to the object detector 48 for object detection.

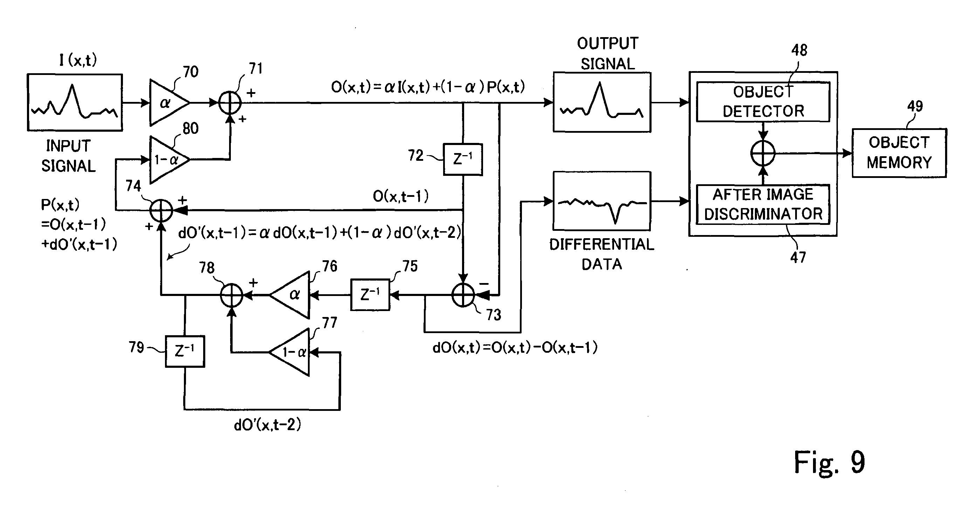

Fig. 9 is a schematic drawing of the structure around the time series signal processor 45.

Input signal I(x, t), indicative of the quantity of light as shown in Fig. 6, is amplified by a factor of $\alpha$ by amplifier 70, added by adder 71 to prediction value P(x, t) multiplied by $(1 - \alpha)$ and outputted as output signal O(x, t). The output signal O(x, t) is delayed by delayer 72 to become delayed output signal O(x, t-1) and outputted to adders 73 and 74. Adder 73 obtains differential signal dO(x, t) between the delayed output signal O(x, t-1) and the output signal O(x, t).

The differential signal dO(x, t) is delayed by a delaying device 75, amplified by a factor of $\alpha$ by amplifier 76 and inputted to adder 78. Delayed differential signal dO'(x, t-1), which is the output from the adder 78, is further delayed by another delaying device 79, amplified by a factor of $(1- \alpha)$ by amplifier 77 and inputted to the adder 78. The delayed differential signal dO'(x, t-1) is added to the delayed output signal O(x, t-1) by adder 74 and outputted as the prediction value P(x, t).

The structure described above is an example of IIR filter with degree 2, obtaining the prediction value P(x, t) linearly from a past data value and its differential.

The differential signal dO(x, t) can be extracted from the middle of the filtering calculation described above. This differential signal dO(x, t) contains the signal (+ or -) that indicates whether the area data value is decreased from the time of the previous scan. If it is the negative (-) signal that is contained, it is judged that the area data value is less than that at the time of the previous scan. If the decreased is greater than a specified value, it is concluded that the area data currently measured by the object detector (after image discriminator) 47 represent a residual image (or an after image).

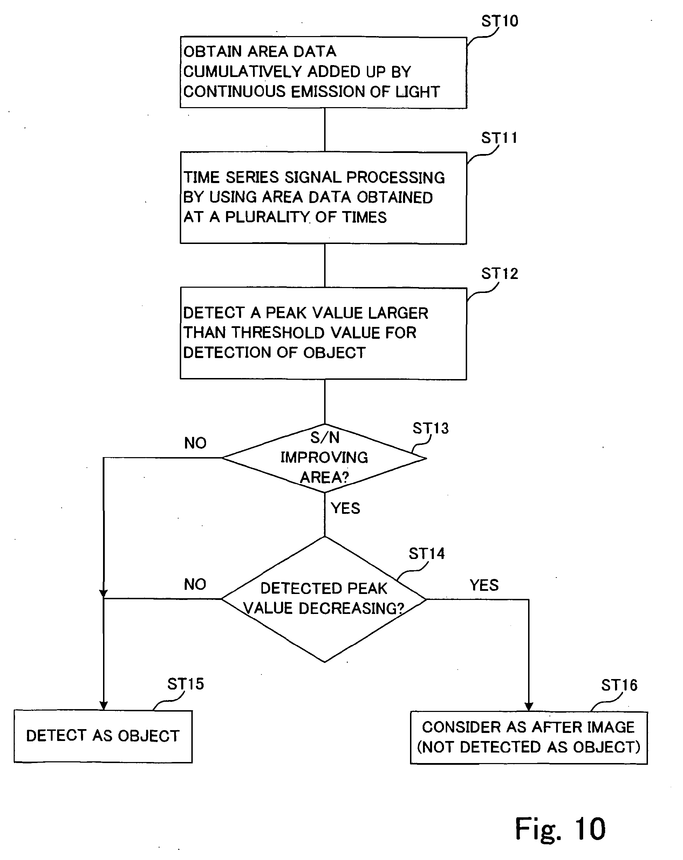

Next, specific operations of the control judging device 40, the time series signal processor 45 and the object detectors 47 and 48 are explained with Fig. 10 and the subsequent figures. The control operations by the control judging device 40, the time series processed by the time series signal processor 45 and the object detection operations by the object detectors 47 and 48 are actually software operations.

The control operations are roughly as shown in Fig. 10. In Step ST10 of the flowchart of Fig. 10, area data cumulatively added up or integrated by emitting light repetitively and continuously are obtained from the area data memory 44. Next, the time series signal processor 45 uses area data from a plurality of times to carry out the time series signal processing (or the filtering process) (Step ST11). Next, peak values greater than a specified threshold value are detected for detecting an object (Step ST12). Next, it is determined whether the area to be processed is a S/N improving area or not (Step ST13). If it is not a S/N improving area (NO in Step S13), its peak value is directly detected as an object (Step ST15). If it is a S/N improving area (YES in Step ST13), it is determined whether the detected peak value is less than the previous value by more than a specified value (Step ST14). This determination is carried out by using the differential signal dO(x, t), as explained above with reference to Fig. 9. If the decrease in the detected peak value has decreased by more than the specified value (YES in ST 14), this peak value is considered as representing a residual image (or an after image) and not detected as an object (Step ST16). In other words, it is concluded that the object has left the detection area. If the detected peak value has not decreased from the previous time by more than the specified value, or if it has increased or the decrease was small (NO in Step ST14), this peak is detected as an object (Step ST15).

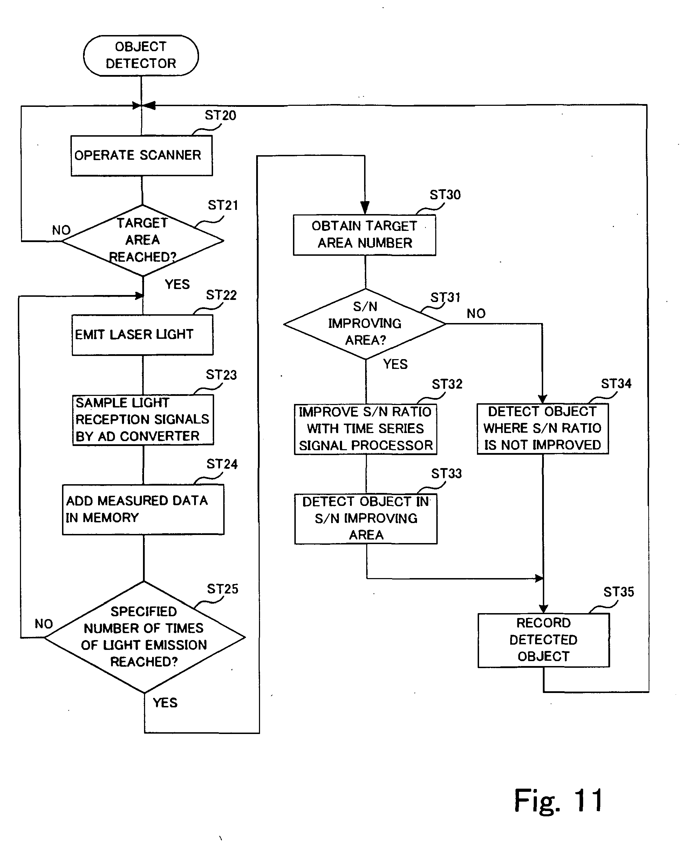

Fig. 11 is a flowchart for more detailed operations of the control judging and other devices. After the scanner 32 is operated (Step ST20), if scanner position is found to have reached the target area for measurement (YES in Step ST21), the light transmission control device 30 of the LR device 3 controls the emission of laser light (Step ST22) and the light reception signals are sampled and AD-converted by the AD converter 41 (Step ST23). The AD-converted area data are cumulatively stored in the cumulative data memory 43 (Step ST24), and this operation is continued until a specified number of times of light transmission has been reached.

After this specified number has been reached (YES in Step ST25), a process on area data is carried out. This is started by obtaining the number of the target area for measurement which is now going to be processed (Step ST30). If the obtained number corresponds to a S/N improving area (YES in Step ST31), the time series filtering process is carried out by the time series signal processor 45 to improve the S/N ratio (Step ST32).

The process of object detection is further carried out (Step ST33). As explained above in this regard, if the area data value has decreased from the previous value by more than a specified value, the current data are considered to represent a residual image (or an after image) and the object detection process is not carried out. If the area number correspond to an area where S/N ratio is not to be improved (NO in Step ST31), an object detection process is carried out from the peak value (Step ST34). The object that was detected in Step ST33 or ST34 is recorded in the object memory 49 (Step ST35).

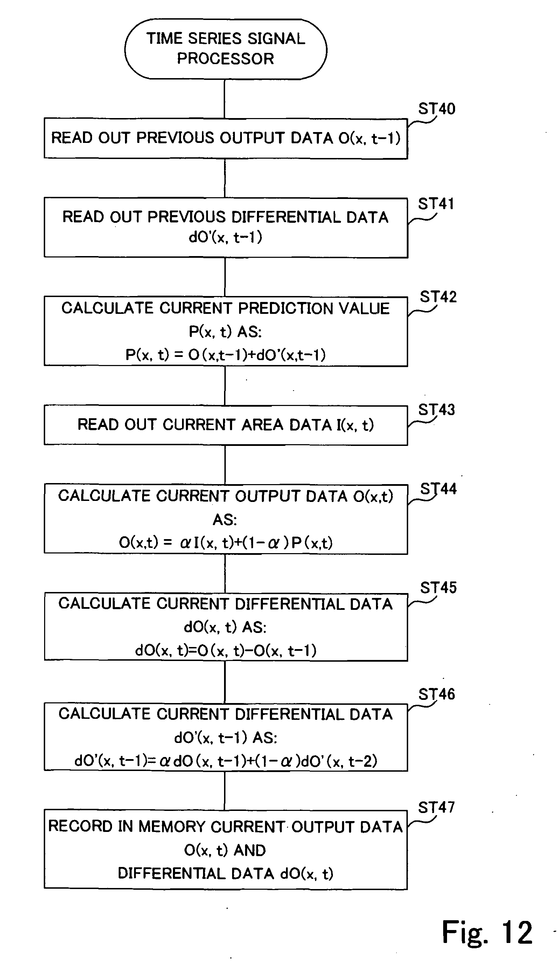

Fig. 12 is a flowchart for showing the operations by the time series signal processor 45 and the object detectors 47 and 48.

The delayed output signal O(x, t-1) as the previous output data value is read out from the calculated data memory 46 (Step ST40), the delayed differential signal dO'(x, t-1) as the previous differential data is read out (Step ST41), and they are added together to calculate the current prediction value P(x, t) (Step ST42). The input signal I(x, t) is read out next as the current area data from the area data memory 44 (Step ST43) and the output signal O(x, t) is calculated as the current output data according to the following formula (Step ST44):

$$O(x, t) = \alpha\, I(x, t) + (1 - \alpha)P(x, t),$$

and the differential signal dO(x, t) as the current differential data is calculated according to the following formula (Step ST45):

$$dO(x, t) = O(x, t) - O(x, t-1).$$

Next, the delayed differential signal dO'(x, t-1) as current differential data is calculated as follows (Step ST46):

$$dO'(x, t-1) = \alpha\, dO(x, t-1) + (1 - \alpha)dO'(x, t-2),$$

and the current output and differential data O(x, t) and dO(x, t) are stored in the calculated data memory 46 (Step ST47).

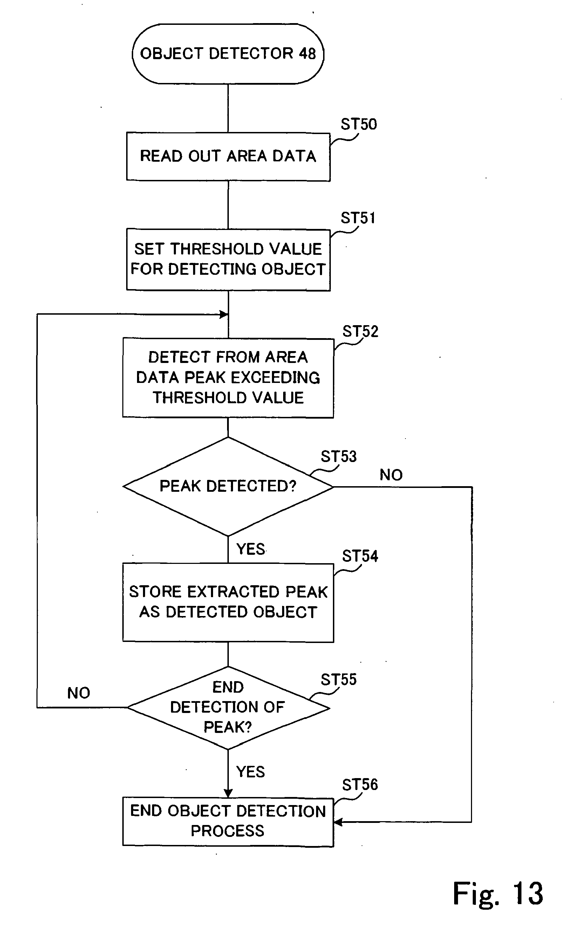

Fig. 13 is a flowchart for specific operations of the object detector 48 for an area other than S/N improving areas. After area data are read out of the area data memory 44 (Step ST50), a threshold value for detecting an object is set (Step ST51). The magnitude of this threshold value is preliminarily determined.

Next, peak values exceeding the threshold value are detected from the area data (Step ST52). The detection process is terminated (Step ST56) if no such peak values can be detected at all (NO in Step ST53). If such a peak value is detected (YES in Step ST53), the detected peak value is considered to be due to an object and is stored as such in the object memory 49 (Step ST54). The detection process is terminated (Step ST56) after all detected peak values are stored in the object memory 49 as a detected object (YES in Step ST55).

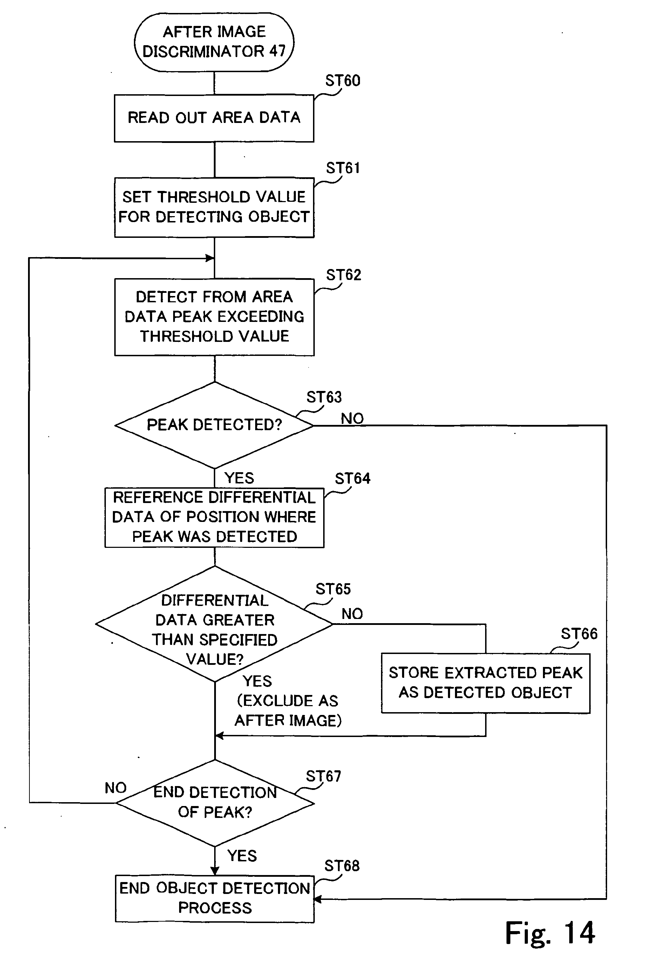

Fig. 14 is a flowchart for specific operations of the object detector (after image discriminator) 47 for a S/N improving area. After area data are read out of the calculated data memory 46 (Step ST60), a threshold value for detecting an object is set (Step ST61). The magnitude of this threshold value is preliminarily determined.

Next, all peak values exceeding the threshold value are detected from the area data (Step ST62). The detection process is terminated (Step ST68) if no such peak values can be detected at all (NO in Step ST63). If a peak is found (YES in Step ST63), the differential data at the position where the peak is extracted are referenced (Step ST64). If the negative symbol (-) is not contained in the differential data, this peak value is stored in the object memory 49 as the detected object (Step ST66) since the peak value at that position represents the object present at that measurement position. If the negative symbol is contained in the differential data and absolute value of the differential data is larger than a specified value (YES in Step ST65), this peak values is considered to represent a residual image (or an after image) and it is excluded from the target object of detection. In other words, the peak value is not stored in this situation.

The object detection process is terminated (Step ST68) after the process described above is carried out with all of the detected peaks (YES in Step ST67).

Although it was stated above that a predetermined value is used as the threshold, the threshold may be variably set, depending upon the measurement of the received signal. The capability of detection may be improved by selecting a threshold value according to the environment of the measurement.

According to this invention, incorrect detection of objects can be prevented because the S/N ratio is improved in the S/N improving areas by carrying out a time series filtering process by means of the time series signal processor 45 while the residual images that may possibly be generated thereby can be eliminated.

Although an example was described above wherein S/N improving areas can be specified both in the right-left direction of the scan (the θ-direction) and in the direction of the distance, they may be set only in the right-left direction of the scan. If the scanning by the scanner 32 is carried out not only in the right-left direction but also in the up-down direction, the S/N improving areas may be set so as to be partitioned also in the up-down direction. In such a situation, a S/N improving area that is three-dimensionally partitioned both in the direction of the distance and in the up-down direction can be set.

Although the S/N improving area can be set by using the improving area specifying means 6, the setting may be effected automatically. Since it is desirable to increase the detection capability in the direction of the distance while the vehicle is traveling at a high speed on a highway, more areas should be set in the direction of the distance than in the right-left direction. While the vehicle is on an ordinary road, however, more areas are set in the right-left direction than in the direction of the distance since it is desirable to increase the detection capability in the right-left direction. While the vehicle is being used at night, more areas are also set in the right-left direction. Such automatic setting is possible on the basis of data received from the vehicle speed sensor or the lamp switches.

**Claims**

1. An object detector for a vehicle, said object detector comprising:

    a light transmission control device that transmits a beam of electromagnetic waves forward so as to scan a target area;
    a light reception control device for receiving reflected waves from an object that is present in front;
    signal converting means for converting received waves into a reception signal according to the intensity of said reflected waves; and
    object detecting means for detecting said object based on a peak of said reception signal, said object detecting means including:

    signal adding means for generating area data by cumulatively adding up received signals for each of a specified number of areas into which said target area is partitioned;
    a memory that stores said area data for each of said areas;
    time series processing means for carrying out time series filtering of said area data read out of said memory;
    **characterized by**
    an object detector that carries out a detection process if current area data obtained by a current scan with the time series filtering carried out by said time series processing means include a latest peak corresponding to one of said areas, if a past peak appeared by a previous scan corresponding to said one area and if said latest peak is not less than said past peak in value by more than a specified value, said object detector excluding said current area data from said detection process if said latest peak is less than said past peak in value by more than said specified value.

2. The object detector of claim 1 wherein said target area is partitioned into said specified number of areas in the directions of scan and distance from said vehicle; and
wherein said object detector carries out said detection process by using the area data stored in said memory.

3. The object detector of claim 1 further comprising inputting means for specifying areas where values of said latest peak and said past peak are compared and areas where values of said latest peak and said past peak are not compared.

4. The object detector of claim 2 further comprising inputting means for specifying areas where values of said latest peak and said past peak are compared and areas where values of said latest peak and said past peak are not compared.

**Patentansprüche**

1. Objektdetektor für ein Fahrzeug, wobei der Objektdetektor aufweist:

eine Lichtsendesteuervorrichtung, die einen Strahl elektromagnetischer Wellen einen Zielbereich abtastend nach vorne aussendet;
eine Lichtempfangssteuervorrichtung für den Empfang von von einem Objekt, das vorne zugegen ist, reflektierten Wellen;
Signalumwandlungsmittel für die Umwandlung empfangener Wellen in ein Empfangssignal gemäß der Intensität der reflektierten Wellen; und
Objektnachweismittel für einen Nachweis des Objekts beruhend auf einer Spitze des Empfangssignals, wobei die Objektnachweismittel enthalten:

Signalhinzufügungsmittel zur Erzeugung von Bereichsdaten durch kumulatives Aufsummierten von empfangenen Signalen für jeden einer vorgegebenen Anzahl von Bereichen, in die der Zielbereich unterteilt ist;
einen Speicher, der die Bereichsdaten für jeden der Bereiche speichert;
Zeitfoigeverarbeitungsmittet für das Durchrühren einer Zeitfolgefilterung der aus dem Speicher ausgelesenen Bereichsdaten; **gekennzeichnet durch**
einen Objektdetektor, der einen Nachweisvorgang ausführt, wenn durch eine aktuelle Abtastung mit der **durch** die Zeitfolgeverarbeitungsmittel ausgeführten Filterung gewonnene aktuelle Bereichsdaten eine späteste Spitze enthalten, die einem der Bereiche entspricht, wenn eine dem einen Bereich entsprechende vergangene Spitze **durch** eine vorhergehende Abtastung erschien, und wenn die späteste Spitze in ihrem Wert nicht um mehr als einen vorgegebenen Wert geringer als die vergangene Spitze ist, wobei der Objektdetektor die aktuellen Bereichsdaten aus dem Nachweisvorgang ausnimmt, wenn die späteste Spitze in ihrem Wert um mehr als den vorgegebenen Wert geringer als die vergangene Spitze ist.

2. Objektdetektor nach Anspruch 1, wobei der Zielbereich in die vorgegebene Anzahl von Bereichen in den Richtungen der Abtastung und Entfernung vom Fahrzeug unterteilt ist;
wobei der Objektdetektor den Nachweisvorgang unter Verwendung der in dem Speicher gespeicherten Bereichsdaten durchführt.

3. Objektdetektor nach Anspruch 1, welcher ferner Eingabemittel zur Spezifizierung von Bereichen, in denen Werte der spätesten Spitze und der vergangenen Spitze verglichen werden, und von Bereichen, in denen Werte der spätesten Spitze und der vergangenen Spitze nicht verglichen werden, aufweist.

4. Objektdetektor nach Anspruch 2, welcher ferner Eingabemittel zur Spezifizierung von Bereichen, in denen Werte der spätesten Spitze und der vergangenen Spitze verglichen werden, und von Bereichen, in denen Werte der spätesten Spitze und der vergangenen Spitze nicht verglichen werden, aufweist.

**Revendications**

1. Détecteur d'objet destiné à un véhicule, ledit détecteur d'objet comprenant:

• un dispositif de commande d'émission de la lumière qui transmet une faisceau d'ondes électromagnétiques vers l'avant afin de balayer une zone cible ;

• un dispositif de commande de réception de la lumière destiné à recevoir les ondes réfléchies par un objet qui est présent devant ;

• des moyens de conversion de signaux destinés à convertir les ondes reçues en un signal de réception selon l'intensité desdites ondes réfléchies ; et

• des moyens de détection d'objet destinés à détecter ledit objet sur la base d'un pic dudit signal de réception, lesdits moyens de détection d'objet comprenant :

• des moyens d'addition de signaux destinés à générer des données de zones en additionnant de manière cumulative les signaux reçus pour chacune d'un certain nombre spécifié de zones en lesquelles ladite zone cible est divisée ;

• une mémoire qui stocke lesdites données de zones pour chacune desdites zones ;

• des moyens de traitement de séries chronologique destinés à effectuer un filtrage de séries chronologiques desdites données de zones lues dans ladite mémoire ; **caractérisé par** :

• un détecteur d'objet qui exécute un procédé de détection si les données de zones actuelles obtenues par un balayage actuel, un filtrage de séries chronologiques étant effectué par lesdits moyens de traitement de séries chronologiques, comprennent un dernier pic qui correspond à l'une desdites zones, si un pic antérieur est apparu au cours d'un balayage précédent correspondant à l'une desdites zones et si la valeur dudit dernier pic n'est pas inférieure à la valeur dudit pic antérieur de plus qu'une valeur spécifiée, ledit détecteur d'objet excluant lesdites données de zones actuelles dudit procédé de détection si la valeur dudit dernier pic est inférieure à la valeur dudit pic antérieur de plus que ladite valeur spécifiée.

2. Détecteur d'objet selon la revendication 1, dans lequel ladite zone cible est divisée en ledit nombre spécifié de zones dans les directions du balayage et en distance à partir dudit véhicule ; et dans lequel ledit détecteur d'objet exécute ledit procédé de détection en utilisant les données de zones stockées dans ladite mémoire.

3. Détecteur d'objet selon la revendication 1, comprenant en outre des moyens d'entrée destinés à spécifier les zones où les valeurs dudit dernier pic et dudit pic antérieur sont comparées et les zones où les valeurs dudit dernier pic et dudit pic antérieur ne sont pas comparées.

4. Détecteur d'objet selon la revendication 2, comprenant en outre des moyens d'entrée destinés à spécifier les zones où les valeurs dudit dernier pic et dudit pic antérieur sont comparées et les zones où les valeurs dudit dernier pic et dudit pic antérieur ne sont pas comparées.

Fig. 1

P: S/N IMPROVING AREA

4: OBJECT DETECTOR

Fig. 2

4

5

3

LR DEVICE

L

GPS — 50

NAVIGATION DEVICE — 51

YAW RATE SENSOR — 52

SPEED SENSOR — 53

LIGHT SWITCH — 54

Fig. 3

Fig. 4

EP 1 970 727 B1

LIGHT EMITTING
PERIOD
(M TIMES)

NON-LIGHT
EMITTING
PERIOD

T1(n)　　　　　T2　　　　　　T1(n)

Fig. 5

INTEGRATED
QUANTITY
OF RECEIVED
LIGHT I (x, t)

DISTRIBUTION OF RECEIVED LIGHT
IN THE DIRECTION OF DISTANCE

PEAK IN RECEIVED LIGHT
FROM DETECTED OBJECT

DISTANCE:X

## Fig. 6

BEFORE

I(x, t)

P1

AFTER

I(x, t)

x

x

## Fig. 7A

BEFORE

I(x, t)

P1

AFTER

I(x, t)

P2

x

x

## Fig. 7B

SCANNING ANGLE

Fig. 8A

SCANNING ANGLE

AREA A

CONTINUOUS ILLUMINATION

AREA B

TIME SERIES SIGNAL PROCESSING FOR AREA B — ST1

EXTRACT PEAK FROM DISTRIBUTION OF QUANTITY OF RECEIVED LIGHT — ST2

QUANTITY OF RECEIVED LIGHT DECREASED BY MORE THAN SPECIFIED VALUE? — ST3

Yes

No

EXCLUDE FROM OBJECT OF DETECTION

DETECT PEAK AS OBJECT — ST4

Fig. 8B

EP 1 970 727 B1

Fig. 9

```
                                              ST10
  ┌──────────────────────────────┐
  │ OBTAIN AREA DATA             │
  │ CUMULATIVELY ADDED UP BY     │
  │ CONTINUOUS EMISSION OF LIGHT │
  └──────────────────────────────┘
                  │
                                              ST11
  ┌──────────────────────────────┐
  │ TIME SERIES SIGNAL PROCESSING│
  │ BY USING AREA DATA OBTAINED  │
  │ AT A PLURALITY OF TIMES      │
  └──────────────────────────────┘
                  │
                                              ST12
  ┌──────────────────────────────┐
  │ DETECT A PEAK VALUE LARGER   │
  │ THAN THRESHOLD VALUE FOR     │
  │ DETECTION OF OBJECT          │
  └──────────────────────────────┘
                  │
                                              ST13
           NO  ◇ S/N
        ┌──────  IMPROVING
        │       AREA? ◇
        │          │ YES
        │                                     ST14
        │  NO  ◇ DETECTED PEAK      YES
        ├──────  VALUE DECREASING? ◇ ──────┐
        │          │                       │
        ▼                                  ▼
     ST15                               ST16
  ┌──────────────────┐      ┌──────────────────────────┐
  │ DETECT AS OBJECT │      │ CONSIDER AS AFTER IMAGE  │
  │                  │      │ (NOT DETECTED AS OBJECT) │
  └──────────────────┘      └──────────────────────────┘
```

Fig. 10

Fig. 11

Flowchart:

OBJECT DETECTOR

ST20 — OPERATE SCANNER

ST21 — TARGET AREA REACHED? — NO (loop back) / YES

ST22 — EMIT LASER LIGHT

ST23 — SAMPLE LIGHT RECEPTION SIGNALS BY AD CONVERTER

ST24 — ADD MEASURED DATA IN MEMORY

ST25 — SPECIFIED NUMBER OF TIMES OF LIGHT EMISSION REACHED? — NO (loop back) / YES

ST30 — OBTAIN TARGET AREA NUMBER

ST31 — S/N IMPROVING AREA? — NO / YES

ST32 — IMPROVE S/N RATIO WITH TIME SERIES SIGNAL PROCESSOR

ST33 — DETECT OBJECT IN S/N IMPROVING AREA

ST34 — DETECT OBJECT WHERE S/N RATIO IS NOT IMPROVED

ST35 — RECORD DETECTED OBJECT

TIME SERIES SIGNAL
PROCESSOR

READ OUT PREVIOUS OUTPUT DATA O(x, t-1) — ST40

READ OUT PREVIOUS DIFFERENTIAL DATA
dO'(x, t-1) — ST41

CALCULATE CURRENT PREDICTION VALUE
P(x, t) AS:
$P(x, t) = O(x,t-1)+dO'(x,t-1)$ — ST42

READ OUT CURRENT AREA DATA I(x, t) — ST43

CALCULATE CURRENT OUTPUT DATA O(x,t)
AS:
$O(x,t) = \alpha I(x, t)+(1-\alpha)P(x,t)$ — ST44

CALCULATE CURRENT DIFFERENTIAL DATA
dO(x, t) AS:
$dO(x, t)=O(x, t)-O(x, t-1)$ — ST45

CALCULATE CURRENT DIFFERENTIAL DATA
dO'(x, t-1) AS:
$dO'(x, t-1)=\alpha dO(x, t-1)+(1-\alpha)dO'(x, t-2)$ — ST46

RECORD IN MEMORY CURRENT OUTPUT DATA
O(x, t) AND
DIFFERENTIAL DATA dO(x, t) — ST47

## Fig. 12

```
        ( OBJECT DETECTOR 48 )
                  │
                  │                    ST50
        ┌─────────────────────┐
        │   READ OUT AREA DATA │
        └─────────────────────┘
                  │
                  │                    ST51
        ┌─────────────────────┐
        │  SET THRESHOLD VALUE │
        │  FOR DETECTING OBJECT│
        └─────────────────────┘
                  │
    ┌──────────► │
    │             │                    ST52
    │   ┌─────────────────────┐
    │   │   DETECT FROM AREA   │
    │   │  DATA PEAK EXCEEDING │
    │   │   THRESHOLD VALUE    │
    │   └─────────────────────┘
    │             │
    │             ◇  ST53          NO
    │        PEAK DETECTED? ───────────┐
    │             │                    │
    │            YES       ST54        │
    │   ┌─────────────────────┐        │
    │   │  STORE EXTRACTED PEAK│        │
    │   │  AS DETECTED OBJECT  │        │
    │   └─────────────────────┘        │
    │             │                    │
    │    NO       ◇   ST55             │
    └───────── END                     │
              DETECTION OF             │
                PEAK?                  │
                  │                    │
                 YES     ST56          │
        ┌─────────────────────┐        │
        │ END OBJECT DETECTION │◄───────┘
        │      PROCESS         │
        └─────────────────────┘
```

Fig. 13

```
      ╭─────────────────╮
      │  AFTER IMAGE    │
      │ DISCRIMINATOR 47│
      ╰────────┬────────╯
               │              ST60
      ┌────────┴────────┐
      │ READ OUT AREA DATA │
      └────────┬────────┘
               │              ST61
      ┌────────┴────────┐
      │ SET THRESHOLD VALUE │
      │ FOR DETECTING OBJECT │
      └────────┬────────┘
               │              ST62
      ┌────────┴────────┐
      │  DETECT FROM AREA │
      │ DATA PEAK EXCEEDING │
      │  THRESHOLD VALUE  │
      └────────┬────────┘
               │              ST63
          ◇ PEAK DETECTED? ◇──── NO ────┐
               │                          │
              YES              ST64       │
      ┌────────┴────────┐                 │
      │ REFERENCE DIFFERENTIAL │          │
      │ DATA OF POSITION WHERE │          │
      │ PEAK WAS DETECTED │               │
      └────────┬────────┘                 │
               │              ST65        │
          ◇ DIFFERENTIAL ◇──── NO ──┐     │
          ◇ DATA GREATER ◇          │     │
          ◇ THAN SPECIFIED ◇  ST66  │     │
          ◇ VALUE? ◇    ┌──────────┴──┐   │
               │        │ STORE EXTRACTED PEAK │
              YES       │ AS DETECTED OBJECT │  │
          (EXCLUDE AS   └──────┬──────┘   │
           AFTER IMAGE)        │          │
               │◄──────────────┘          │
               │              ST67        │
     NO   ◇ END DETECTION ◇               │
     ◄────◇ OF PEAK? ◇                    │
               │                          │
              YES              ST68       │
      ┌────────┴────────┐                 │
      │ END OBJECT DETECTION │◄───────────┘
      │      PROCESS     │
      └─────────────────┘
```

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9318728 A
- JP 2743365 B
- US 2003218919 A1
- EP 1172664 A

**Non-patent literature cited in the description**

- Scan-to-scan integration-correlation for the detection of small fast targets. **HOFELE F X.** RADAR. CIE INTERNATIONAL CONFERENCE ON, PROCEEDINGS, 15 October 2001, 380-384
- ANALYTIC COMPARISON OF FOUR ROBUST ALGORITHMS FOR POST-DETECTION INTEGRATION. **LEVANON N.** IEE PROCEEDINGS F. COMMUNICATIONS, RADAR & SIGNAL PROCESSING. INSTITUTION OF ELECTRICAL ENGINEERS, 01 February 1992, vol. 139, 67-72